# EUROPÄISCHE PATENTSCHRIFT

(11) **EP 2 418 472 B1**
(45) Veröffentlichungstag und Bekanntmachung des Hinweises auf die Patenterteilung: **07.08.2013**
(21) Anmeldenummer: 10008445.8
(22) Anmeldetag: 13.08.2010
(51) Int. Cl.: G01N 21/03

(54) **Vorrichtung zur Anordnung wenigstens eines Probengefäßes in einem optischen Messgerät, optisches Messgerät mit einer solchen Vorrichtung und Verwendung eines solchen optischen Messgerätes**
Device for assembling at least one sample container in an optical measuring device, optical measuring device with such a device and use of such an optical measuring device
Dispositif d'agencement d'au moins un récipient d'échantillons dans un appareil de mesure optique, appareil de mesure optique doté d'un tel dispositif et utilisation d'un tel appareil de mesure optique

(43) Veröffentlichungstag der Anmeldung: 15.02.2012
(73) Patentinhaber: Berthold Technologies GmbH & Co. KG, 75323 Bad Wildbad (DE)
(72) Erfinder: Haefner, Peter, 75305 Neuenbürg (DE); Hutter, Bernd, 75331 Engelsbrand (DE)
(74) Vertreter: Schön, Thilo

(56) Entgegenhaltungen:
- WO-A1-93/13491
- DE-B3-102006 043 117
- FR-A1- 2 806 583
- US-A1- 2009 025 287
- US-A1- 2009 310 839

## Beschreibung

Die Erfindung betrifft eine Vorrichtung zur Anordnung wenigstens eines Probengefäßes in einem optischen Messgerät nach Anspruch 1, ein optisches Messgerät mit einer solchen Vorrichtung nach Anspruch 11 und die Verwendung eines solchen optischen Messgerätes nach Anspruch 14.

Die gattungsbildende FR 2 806 583 A1 zeigt eine Vorrichtung zur Beobachtung von Pflanzenwachstum. Diese Vorrichtung weist eine Kammer auf, in welcher die zu beobachteten Pflanzen angeordnet werden können. Es ist eine Ventilationseinrichtung mit einem Heizelement vorgesehen, so dass die der Kammer zugeführte Luft erwärmt werden kann.

In der biologischen und pharmazeutischen Forschung werden Fluoreszenz- und Lumineszenzmessverfahren seit vielen Jahren erfolgreich eingesetzt. Hierbei werden transfizierte oder transgene Tiere oder Pflanzen verwendet, wobei wenigstens ein Gen der betreffenden Pflanze oder des betreffenden Tieres ein Protein kodieren kann, das Lumineszenz oder Fluoreszenz zeigt. Ist dieses Gen aktiv, so wird dieses Protein gebildet und durch Beobachtung dessen Lumineszenz oder Fluoreszenz kann man Rückschlüsse auf die Aktivität des betreffenden Gens ziehen und somit weiterhin beispielsweise auf die Wirksamkeit bestimmter Substanzen auf das Tier/die Pflanze schließen. Die Messung der Lumineszenz- bzw. Fluoreszenzaktivität kann integral oder ortsaufgelöst durchgeführt werden.

Insbesondere bei Pflanzen unterliegt die Expression vieler dieser zu untersuchenden Gene einem tageszeitlichen Rhythmus (circadianer Rhythmus) oder einer Abhängigkeit von Wachstumsphasen. Beides kann wiederum durch äußere Einflüsse natürlicher oder künstlicher Herkunft beeinflusst werden. Die Genexpressionen werden daher über längere Zeiträume (von Stunden bis zu mehreren Wochen) verfolgt.

Um das Probenmaterial, das heißt Pflanzen oder Keimlinge, vor ungewollten Kontaminationen frei zu halten, werden die Probengefäße, beispielsweise Petrischalen, zumindest verschlossen, manchmal auch sterilisiert und verschlossen. Dies geschieht üblicherweise mit transparenten Deckeln, die zusätzlich mit Klebeband oder Parafilm befestigt werden. Die Proben befinden sich im Probengefäß üblicherweise in beziehungsweise auf einem wässrigen Flüssig- oder Festmedium.

Das wenigstens eine Probengefäß befindet sich auf einem Träger, welcher eine einfache Platte sein kann. Um, insbesondere bei mehreren Probengefäßen, immer dieselben Messpositionen zu haben, weist ein solcher Träger Vertiefungen oder ähnliches auf, so dass der Träger die geometrische Anordnung der Probengefäße bestimmt. Im folgenden wird der Einfachheit halber immer von mehreren Probengefäßen gesprochen, es ist jedoch klar, dass auch nur ein Probengefäß vorhanden sein kann.

Die Messung der Lumineszenz oder Fluoreszenz erfolgt mittels einer optischen Sensoreinheit - zumeist ein Photomultipier oder eine empfindliche CCD-Kamera -, welche sich oberhalb des wenigstens einen Probengefäßes befindet.

Die vorliegende Erfindung stellt sich die Ausgabe, den Stand der Technik dahingehend zu verbessern, dass die Reproduzierbarkeit der Lumineszenz- oder Fluoreszenzmessungen verbessert wird.

Es hat sich herausgestellt, dass es beim Betrieb des optischen Messgerätes zu einer Kondensatbildung an den Deckeln der Probengefäße kommen kann. Kondensation zu größeren Tröpfchen verfälscht durch Streuung und/oder Absorption die durchgeführt Messung (zumeist eine Fluoreszenz- oder Lumineszenzmessung; es kann sich aber auch um eine photographische Aufnahme handeln). Dies ist insbesondere bei Langzeitexperimenten, bei welchen ein Probengefäß oder ein Satz von Probengefäßen über mehrere Tage oder Wochen im optischen Messgerät verbleibt, aus mehreren Gründen sehr problematisch: Werden Lumineszenz- oder Fluoreszenzaufnahmen gemacht, so "sieht" die optische Sensoreinheit - insbesondere wenn sie ohne Ortsauflösung arbeitet - die entstandenen Kondensattröpfchen nicht. Von außen können diese auch nicht bemerkt werden, da bei Fluoreszenz- und Lumineszenzmessungen ein lichtdichtes Gehäuse vorhanden sein muss. Das heißt, dass die gesamte Messreihe wertlos sein kann und die Messzeit verloren ist. Noch schlimmer ist es, wenn das gebildete Kondensat durch Änderung der Bedingungnen, insbesondere der Temperatur, vor Beendigung der Messreihe wieder verdunstet. In diesem Fall kann dies unbemerkt bleiben und das verfälscht Messergebnis wird weiterverwendet.

Es ist deshalb eine Ventilatianseinrichtung mit einem Heizelement vorgesehen. Diese Ventilationseinrichtung ist so angeordnet, dass sie einen auf die Deckel gerichteten oder diese überstreichenden, erwärmten Luftstrom erzeugen und somit die Deckel erwärmen kann, wodurch eine Kondensatbildung auf den Außenseiten oder den Innenseiten der Deckel der Probengefäße verhindert wird.

Erfindungsgemäß ist ein Regelkreis zur Ansteuerung der Ventilationseinrichtung vorgesehen. Dieser ist vorzugsweise so eingestellt, dass die Erwärmung der Dekkel durch die Ventilationseinrichtung nur gerade so groß ist, dass die Temperatur der Deckel immer größer als der Taupunkt der Luft in den Probegefäßen und immer größer als der Taupunkt der Luft außerhalb der Probengefäße ist.

Vorzugsweise ist der Träger temperierbar, so dass über den Träger die Probengefäße und somit die Pflanzen/Keimlinge kontrolliert temperiert und somit Umweltbedingungen simuliert werden können.

Unter welchen Bedingungen eine Kondensation an einem Körper bei umgebender Luft stattfindet, kann den bekannten Taupunktkurven entnommen werden. Als Taupunkt oder Taupunkttemperatur bezeichnet man die Temperatur, bei der sich auf einen Gegenstand (bei gegebener Feuchte) ein Gieichgewichtszustand von kondensierendem und verdunstendem Wasser einstellt, mit anderen Worten, die Kondensatbildung gerade einsetzt. Die relative Feuchte in der Luft ist bei gegebenem Druck von der Temperatur abhängig. Luft, die nicht vollständig mit Wasserdampf gesättigt ist, hat eine relative Feuchte kleiner als 100% und kann bei unveränderter Temperatur weiteren Wasserdampf aufnehmen. Nimmt die Temperatur ab, nimmt auch die Aufnahmefähigkeit der Luft für Wasserdampf ab, das heißt, bei gegebener Feuchte steigt die relative Feuchte an. Beim Taupunkt ist eine relative Feuchte von 100% erreicht, es kommt zur Kondensation. Dabei bildet sich auf festen oder flüssigen Grenzflächen ein Niederschlag, der Effekt ist stärker, je geringer die Temperatur der Grenzflächen beziehungsweise je höher die Luftfeuchte ist. Die Abhängigkeit des Taupunktes von Temperatur und relativer Luftfeuchte kann den bekannten Taupunktkurven entnommen werden.

Um die Kondensation an den Deckeln der Probenträger zu verhindern, werden die Deckel mit temperierter Luft umströmt, die so gewählt wird, dass bei gegebener relativer Feuchte der umgebenden Luft innen oder außen die Temperatur des Deckels immer ausreichend oberhalb des Taupunktes liegt. Allerdings liegen innerhalb und außerhalb der Petrischale unterschiedliche Bedingungen vor. Man muss beachten, dass die Pflanzen selbst in einem wässrigen Flüssig- oder Festmedium eingebracht sind und hier möglicherweise eine bis zu 100% relative Luftfeuchte vorhanden sein könnte, während diese im Außenraum in einem Gehäuse des Messgerätes im allgemeinen viel niedriger ist. Der höhere Taupunkt legt die minimale Temperatur des Deckels fest, die ausreichend oberhalb dieses Taupunktes liegen muß, damit weder innen noch aussen eine Kondensation entstehen kann.

Als Beispiel nehmen wir an, die Temperatur im einem Gehäuse des Messgerätes sei 30°C, die relative Feuchte der Luft 50%, die Temperatur des Trägers, auf welcher sich die Petrischalen befinden, sei 10°C, die Temperatur der Luft in der Petrischale oberhalb der Pflanzen sei 12°C und die relative Feuchte 90%. Nach der obigen Grafik beträgt der Taupunkt im Außenraum der Petrischale 18°C und der Taupunkt im Innenraum 11°C. Wenn die Abdeckung der Petrischale immer auf einer Temperatur größer als 18°C gehalten wird, kann es von außen keine Kondensation geben und von innen erst recht nicht.

Die Temperatur des von der Ventilationseinrichtung erzeugten Luftstroms wird so geregelt, dass die obige Bedingung bezüglich der Taupunkte eingehalten wird.

Die Temperatur der Deckel wird mit einem an repräsentativer Stelle angebrachten Temperaturfühler erfasst und in einem ersten Regelkreis als Istwert verwendet und ständig mit dem Sollwert verglichen. Bei Abweichungen wird die Temperatur mittels der Ventilationseinrichtung entsprechend nachgeregelt.

Die Erfindung wird nun anhand eines Ausführungsbeispiels mit Bezug auf die Figuren näher erläutert. Hierbei zeigen:
- Figur 1: einen schematisierten Querschnitt durch ein optisches Messgerät mit einer erfindungsgemäßen Vorrichtung zur Anordnung von Probengefäßen,
- Figur 2: einen alternativen Träger mit Temperierungseinrichtung,
- Figur 3: eine Draufsicht auf die Ventilationseinrichtung in Figur 1 aus Richtung R,
- Figur 4: ein Diagramm, in welchem Taupunktlinien bei unterschiedlichen Temperaturen und Luftfeuchtigkeiten eingezeigt sind,

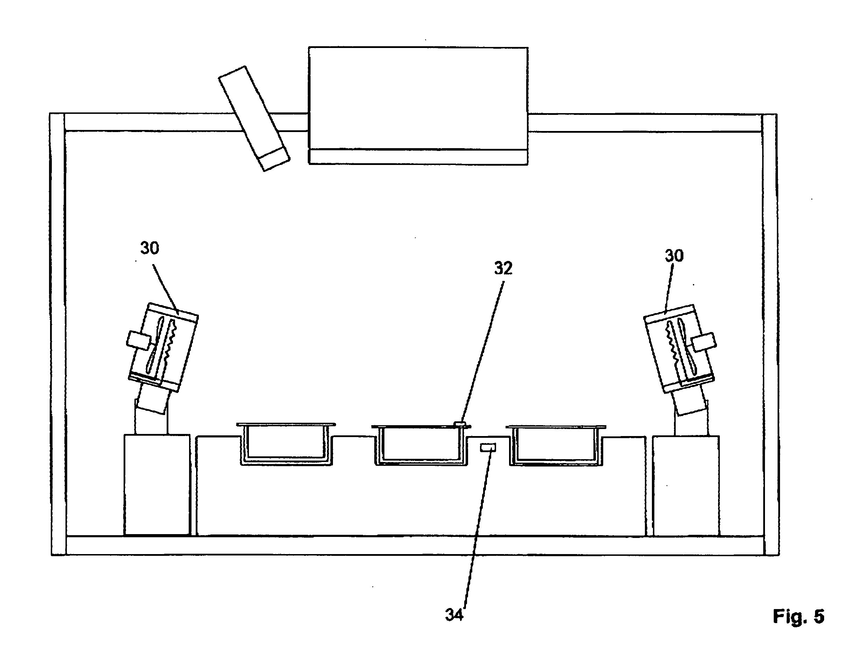

- Figur 5: ein zweites Ausführungsbeispiel der Erfindung in einer der Figur 1 entsprechenden Darstellung und
- Figur 6: ein Diagramm, welches die Abhängigkeit der relativen Luftfeuchte von der Temperatur zeigt.

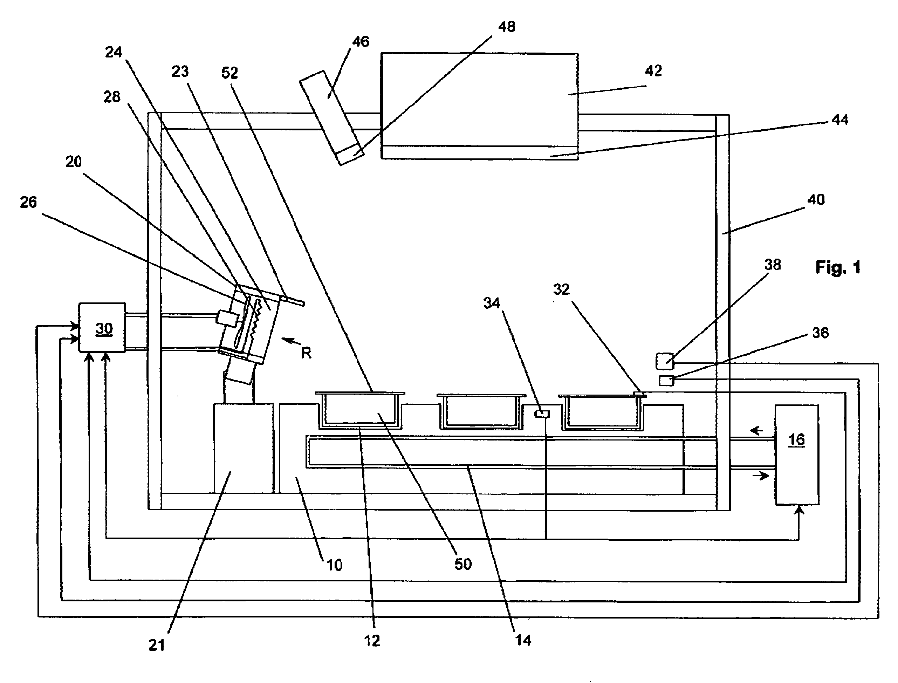

Die Figur 1 zeigt ein optisches Messgerät zur Messung von Lumineszenz und/oder Fluoreszenz von Pflanzen oder Keimlingen, welche sich in als Petrischalen ausgebildeten Probengefäßen 50 befinden- In der Regel sind mehrere solche Probengefäße 50 vorhanden, beispielsweise 9 Stück, wobei aufgrund der Schnittdarstellung nur drei zu sehen sind. Die Probengefäße 50 sind bei der Messung mit einem Deckel 52 verschlossen.

Die Probengefäße 50 sind auf einem Träger 10 angeordnet, welcher für jedes Probengefäß eine Vertiefung 12 aufweist. Der Träger 10 besteht im gezeigten Ausführungsbeispiel aus Metall, insbesondere aus Aluminium, und hat eine entsprechend hohe Wärmeleitfähigkeit. Oberhalb des Trägers 10 ist ein optisches Messinstrument, hier in Form einer Kamera, insbesondere einer CCD-Kamera 42 angeordnet, welche nach unten blickt Vor dem Eintrittsfenster dieser Kamera 42 ist ein Emissionsfilter 44 angeordnet, welches nur Licht einer bestimmten Wellenlänge zur Kamera 42 durchlässt. Es ist weiterhin eine Anregungslichtquelle 46 vorhanden, welche in Richtung des Trägers 10 zeigt und in deren Strahlengang ein Anregungsfilter 48 vorhanden ist. Die Funktionsweise eines solchen Fluorometers ist grundsätzlich bekannt und muss hier nicht im Detail erläutert werden. Je nach gegebener Geometrie ist es zum einen möglich, dass die Kamera 42 alle Probengefäße 50 gleichzeitig sieht oder es kann eine relative Verschieblichkeit zwischen Träger 10 und Kamera 42 in horizontaler Richtung vorgesehen sein, so dass die Kamera jeweils nur ein Probengefäß 50 messen kann (nicht dargestellt). Dasselbe gilt für die Anregungslichtquelle 46: Diese kann entweder so ausgebildet sein, dass sie alle Probengefäße 50 gleichzeitig beleuchtet oder sie kann so ausgebildet sein, dass sie jeweils nur ein aktuell zu messendes Probengefäß beleuchtet, wobei in diesem Fall ebenfalls eine relative Beweglichkeit zwischen Anregungslichtquelle 46 und Träger 10 und/oder eine Verschwenkbarkeit der Anregungslichtquelle 46 gegeben sein muss. Träger 10, Eintrittsfenster der Kamera 42 und Austrittsfienster der Anregungslichtquelle 46 befinden sich in einem lichtdichten Gehäuse 40.

Der Träger 10 ist temperierbar, damit man die Pflanzen/Keimlinge, welche sich in den Probengefäßen 50 befinden, bei unterschiedlichen und definierten Temperaturen beobachten kann. Die Temperierung des Trägers erfolgt im gezeigten Ausführungsbeispiel über einen Flüssigkeitskreislauf. Dieser weist innerhalb des Trägers 10 einen Wärmetauscher 14 und außerhalb des Trägers 10 ein Temperierungsgerät 16, mittels er die umgepumpte Flüssigkeit (zumeist Wasser) temperiert, das heißt in der Regel sowohl erwärmt als auch gekühlt, werden kann. Aufgrund der Vertiefungen 12 (welche im Durchmesser im Wesentlichen den Durchmessern der Probengefäße 50 entsprechen) nehmen nach einer gewissen Betriebsdauer die Probengefäße 50 im Wesentlichen die Temperatur des Trägers an. Hier zu beachten, dass in der schematischen Darstellung aufgrund besserer Übersichtlichkeit ein gewisser Abstand zwischen diesen Probengefäßen 50 und den Wandungen und der Vertiefungen 12 eingezeichnet ist, tatsächlich besteht natürlich unmittelbarer Kontakt zwischen dem Träger 10 und den Probengefäßen 50 zumindest über den Boden der Probengefäße 50. Auch der seitliche Freiraum ist vorzugsweise so klein wie möglich gehalten, um eine möglichst guten Wärmekontakt herzustellen. Dieser kann noch dadurch verbessert werden, dass ein flüssiges Medium in den Vertiefungen 12 vorgesehen ist, so dass sich keine Luftspalte ergeben. Anstatt einen Wärmetauscher vorzusehen, wäre es auch möglich eine direkte elektrische Temperierung des Trägers 10 vorzusehen, nämlich mittels wenigstens eines elektrischen Heizelements und wenigstens eines Peltierkühlers.

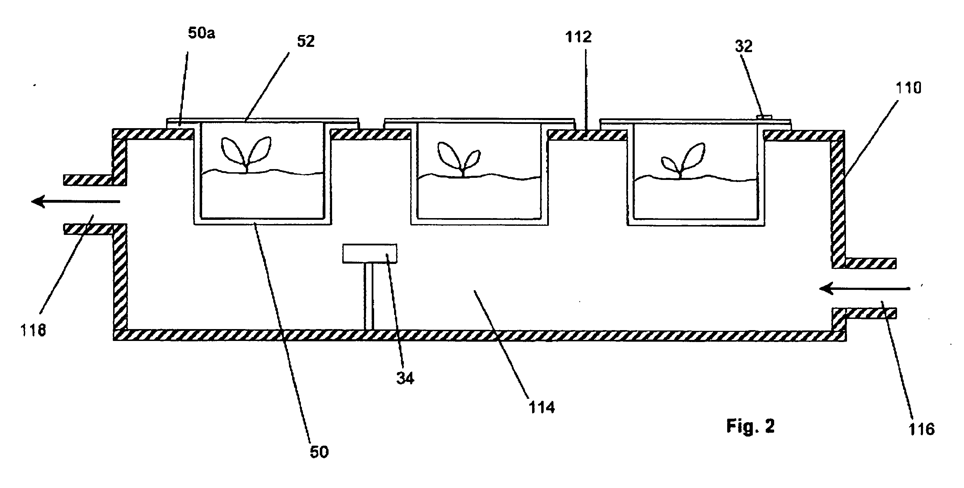

Die Figur 2 zeigt eine alternative Ausführungsform eines Trägers mit dem die Probengefäße 50 temperiert werden können. Hier ist der Träger als gehäuseartiger Träger 110 ausgebildet, welcher einen Hohlraum 114 umschließt. In diesen Hohlraum 114 ist temperierte Luft mittels der Luftzufuhr 116 zuführbar. Die temperierte Luft durchströmt den Hohlraum und verlässt diesen durch den Luftauslass 118. Das zugehörige Temperierungsgerät für die Luft ist nicht dargestellt. Die Oberseite 112 des gehäuseartigen Trägers 110 weist Durchbrechungen auf, durch die die Probengefäße 50 in den Hohlraum 114 ragen, so dass die Temperierung der Probengefäße 50 unmittelbar durch die durch den Hohlraum 114 des gehäuseartigen Trägers 110 strömende Luft erfolgt. Die Probengefäße weisen hier vorzugsweise jeweils einen Kragen auf, welche auf der Oberseite 112 des gehäuseartigen Trägers 110 aufliegen.

In einer weiteren alternativen Ausführungsform ist überhaupt kein separater Träger vorhanden, sondern das wenigstens eine Probengefäß (welches in diesem Fall auch recht groß sein kann), wird unmittelbar auf den Boden des Gehäuses gestellt, welcher dann als Träger dient. Die Temperierung des Probengefäßes erfolgt dann über die Umgebungsluft innerhalb des Gehäuses, deren Temperatur mittels einer Temperierungseinrichtung eingestellt wird. Dies kann mittels eines externen Temperierungsgerätes (ähnlich zur Ausführungsform der Figur 2) oder mittels Heizungs- Kühlungs- oder Wärmetauscherelementen innerhalb des Gehäuses geschehen.

Für das Weitere ist es ohne Bedeutung, wie der Träger konkret ausgebildet ist, ob also die Temperierung der Probengefäß 50 über direkten Kontakt mit einem massiven Träger oder über Luft erfolgt. Im folgenden wird deshalb allgemein immer von der Temperatur des Trägers oder von der Temperatur der Probengefäße gesprochen.

Um die Temperatur des Trägers 10- und somit die der Probengefäße 50 - regeln zu können, ist ein Temperatursensor, nämlich der zweite Temperatursensor 34 vorgesehen, dessen Ausgang mit dem Temperierungsgerät verbunden ist, so dass sich ein Regelkreis - hier zweiter Regelkreis genannt - ergibt.

Die Luft der Messkammer - d.h. die Luft innerhalb des lichtdichten Gehäuses 40 oberhalb des Trägers 10, 110 - hat im Allgemeinen eine Temperatur, welche von der des Trägers 10, 110 verschieden ist (außer bei der oben genannten zweiten alternativen Ausführungsform) und im Allgemeinen zwischen der Temperatur des Trägers 10 und der Umgebungsluft des Labors liegt. Diese Lufttemperatur innerhalb des Gehäuses 22 kann höher oder niedriger als die Temperatur des Trägers sein. Für die hier gezeigte bevorzugte Ausführungsform ist es wichtig diese Temperatur zu kennen, weshalb ein Temperatursensor - hier dritter Temperatursensor genannt - vorhanden ist, welcher diese Lufttemperatur mißt. Dieser dritte Temperatursensor 36 ist vorzugsweise relativ nahe zum Träger 10, 110 und oberhalb des Trägers 10, 110 angeordnet. Es ist ebenfalls wichtig die Luftfeuchtigkeit innerhalb des Gehäuses zu kennen, weshalb ein Luftfeuchtesensor 38, vorzugsweise in der Nähe des dritten Temperatursensors 36, vorgesehen ist.

Schließlich benötigt man noch die Temperatur der die Probengefäße verschließende Deckel 52, wozu wenigstens ein weiterer Temperatursensor - hier erster Temperatursensor 32 genannt - vorhanden ist. Dieser erste Temperatursensor 32 befindet sich in Kontakt zu einem Deckel 52. Sofern nur die Temperatur eines Deckels 52 gemessen wird, ist darauf zu achten, dass an einem Deckel mit geeigneter Position gemessen wird. Hierauf wird später noch genauer eingegangen werden. Die Deckel 52 bestehen in der Regel aus einem sehr dünnen Material wie Glas oder Kunststoff, so dass in der Regel davon auszugehen ist, dass die Temperatur des Deckels nahezu homogen ist. Sofern dies nicht sicher gestellt ist, kann es in einzelnen Anwendungsfällen notwendig sein, die Temperatur eines Deckels 52 sowohl von der Außenseite (wie dargestellt) als auch von der Innenseite (nicht dargestellt) zu messen.

Wie bereits erwähnt wurde, befinden sich in den Probengefäßen 50 Pflanzen oder Keimlinge (in Figur 2 dargestellt), sowie eine wässrige Nährlösung oder Nährboden. Aufgrund dieser wässrigen Nährlösung/des Nährbodens und aufgrund der Tatsache, dass die Probengefäße 50 mittels der Deckel 52 dicht oder nahezu dicht verschlossen sind, kann man im Allgemeinen davon ausgehen (und dies ist für die folgenden Betrachtungen auch der "ungünstigste" Fall), dass die Luftfeuchtigkeit innerhalb der Probengefäße 100% oder nahezu 100% beträgt.

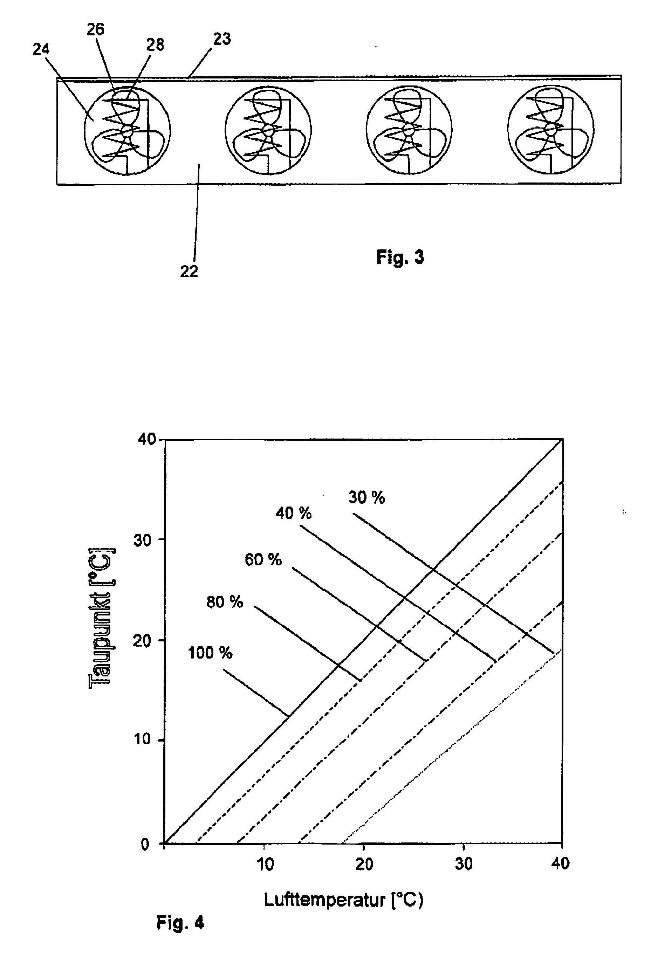

Ziel der vorliegenden Erfindung ist es, eine Möglichkeit zu schaffen, dass die Kamera 42 (also allgemein die optische Sensoreinheit) die Pflanzen oder Keimlinge in den Probengefäßen 50 immer zu gleichen Bedingungen sieht. Diese gewünschten gleichen Bedingungen können dadurch beeinträchtigt werden, dass sich an den Deckeln 52 Kondenswasser niederschlägt. Je nach gegebenen Bedingungen kann dies sowohl von Außen als auch von Innen her geschehen. Um eine solche Kondensatbildung zu verhindern, ist die Ventilationseinrichtung 20 (siehe Figuren 1 und 3) vorgesehen. Diese Ventilationseinrichtung 20 weist ein Gehäuse 22 mit vorzugsweise mehreren Durchgangsöffnungen 24 auf. In jeder dieser Durchgangsöffnungen 24 ist ein Ventilator 26 und ein Heizwendel 28 vorgesehen. Vorzugsweise hat die Ventilationseinrichtung 28 im Wesentlichen die Breite des Trägers 10, 110, so dass ein von der Ventilationseinrichtung 20 erzeugter Luftstrom im Wesentlichen alle Deckel 52 trifft beziehungsweise überströmt. Zur besseren Ausrichtung des erzeugten Luftstroms kann ein Luftleitelement 23 vorgesehen sein. Die Durchgangsöffnungen 24 - und somit auch die Luftaustritte der Ventilationseinrichtung - liegen oberhalb des Trägers 10. Der von der Ventilationseinrichtung erzeugte Luftstrom ist schräg von oben auf die Oberseiten der Deckel gerichtet. Alle anderen Seiten der Probengefäße werden dabei nicht berührt.

Die Ventilationseinrichtung 20 darf sich natürlich nicht im Blickfeld der Kamera 42 und nicht im Lichtpfad der Anregungslichtquelle 46 befinden und ist deshalb neben dem Träger 10 angeordnet. Sie kann direkt am Träger 10 angeordnet sein, an einem seperaten Halteblock 21 (wie dargestellt) oder auch an der Innenseite des lichtdichten Gehäuses 40. In der Regel ist es zu bevorzugen, dass die Ventilationseinrichtung 20 schräg nach unten zeigt und es ist weiter zu bevorzugen, dass der Neigungswinkel einstellbar ist.

Die Ventilationseinrichtung 20 hat die Aufgabe dafür zu sorgen, dass die Temperatur der Deckel 52 stets über dem Taupunkt sowohl der Umgebungsluft (also der Luft, welche sich direkt über den Deckeln befindet), als auch über dem Taupunkt der Luft in den Probengefäßen liegt.

Die entsprechenden Taupunkttemperaturen sind bekannt und anhand von Beispielen in Figur 4 wiedergegeben. In einer sehr einfachen Ausführungsform könnte die Ventilationseinrichtung mit konstanter Wärmeleistung und mit konstantem Luftumsatz permanent laufen und könnte so stark eingestellt sein, dass durch sie die Deckel 52 in jeder anzunehmenden Konstellation so warm gehalten werden, dass eine Kondensation ausgeschlossen ist. Dies ist jedoch meist nicht zu bevorzugen, da in diesem Fall die Heizleistung in der Regel viel zu hoch ist, was sich negativ auf die Temperierung des Trägers und somit der Probengefäße auswirken würde. Insbesondere wenn die Probengefäße relativ kalt sein sollen, ist es natürlich ungünstig, wenn permanent von oben relativ stark geheizt wird. Es ist deshalb vorzugsweise ein erster Regelkreis vorgesehen, der die Ventilationseinrichtung so ansteuert, dass eine Kondensation von Wasser an den Deckeln gerade so verhindert wird. Das heißt, dass die Temperatur der Deckel (sofern überhaupt nötig) durch Erwärmung mittels eines von der Ventilationseinrichtung erzeugten Luftstroms nur knapp über dem höheren Taupunkt gehalten wird. Der erste Regelkreis wird nun beschrieben:
Der erste Regelkreis besteht aus dem ersten Temperatursensor 32, dem zweiten Temperatursensor 34, dem dritten Temperatursensor 36, dem Luftfeuchtesensor 38 und der Steuereinheit 30 für die Ventilationseinrichtung. Der erste Temperatursensor 32 mißt, wie oben bereits dargestellt, die Temperatur der Deckel 52, in der Regel die Temperatur eines repräsentativen Deckels. Es sollte die Temperatur des Deckels gemessen werden, welcher tendenziell am kältesten ist, sich also beispielsweise - wie in Figur 1 dargestellt - am weitesten von der Ventilationseinrichtung weg befindet. Erfüllt dieser das notwendige Temperaturkriterium, so ist davon auszugehen, dass die übrigen Deckel dies auch tun. Es wird ständig die Lufttemperatur im Gehäuse mittels des dritten Temperatursensors 36 und die Luftfeuchte innerhalb des Gehäuses mit dem Luftfeuchtesensor 38 gemessen und daraus der Taupunkt der gemessenen Luft automatisch berechnet. Weiterhin wird permanent die Temperatur des Trägers 10 gemessen, von welcher auch angenommen wird, dass sie im Wesentlichen auch die Temperatur der Probengefäße ist, und mit der Annahme, dass die Luftfeuchtigkeit der Luft innerhalb der Probengefäße 100 % beträgt, wird der Taupunkt dieser Luft automatisch berechnet beziehungsweise geschätzt. Um eine höhere Genauigkeit erzielen zu können, wäre es (mit entsprechendem Mehraufwand) natürlich auch möglich, die Temperatur eines Probengefäßes oder direkt die Temperatur der Luft in einem Probengefäß zu messen. Meist reichen wie oben beschrieben geschätzte Werte für Lufttemperatur und Luftfeuchtigkeit im Probengefäß aus. Die Messungen werden permanent durchgeführt und die entsprechenden Berechnungen werden beispielsweise von einem Mikroprozessor oder der Software eines angeschlossenen Computers erledigt. Nähert sich die Temperatur des Deckels der höheren der beiden bestimmtenbeziehungsweise geschätzten Taupunktstemperaturen auf weniger als einen vorbestimmten Wert, beispielsweise 1°C, so steuert die Steuereinheit 30, welcher die genannten Werte direkt oder indirekt zugeführt werden, die Ventilationseinrichtung an, beziehungsweise erhöht deren aktuelle Leistung durch eine größere Heizleistung und/oder einen größeren Luftdurchsatz. Übersteigt daraufhin die Temperatur des Deckels wieder einen bestimmten Wert, beispielsweise 2°C mehr als die höhere der beiden Taupunktstemperaturen, so schaltet die Steuereinheit die Ventilationseinrichtung wieder ab oder reduziert deren Leistung. Somit kann die Temperatur der Deckel in einem sehr schmalen Band gehalten werden, wodurch einerseits zuverlässig eine Kondensatbildung verhindert wird und andererseits die Heizleistung und der Temperaturunterschied zwischen Deckel und Probengefäß so gering wie möglich gehalten werden.

Es kann vorteilhaft sein, die Ventilatoren permanent laufen zu lassen und über den beschriebenen Regelkreis nur die Heizwendel anzusteuern.

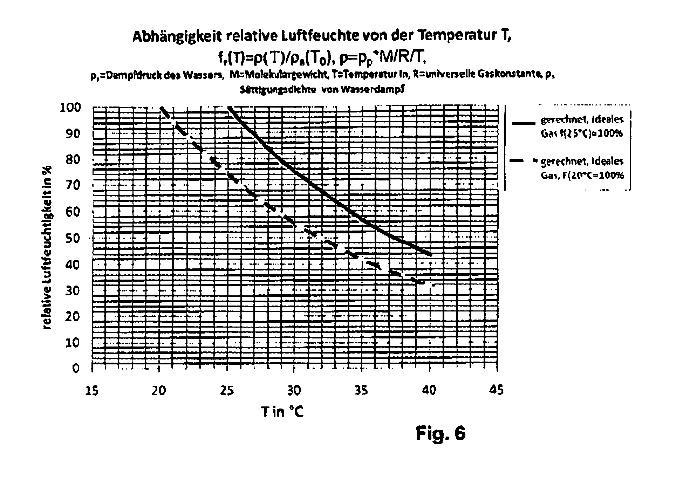

Der physikalische Hintergrund der Erfindung wird besser verständlich, wenn man sich mit Hilfe der Gleichung eines idealen Gases die Abhängigkeit der relativen Luftfeuchte von der Temperatur veranschaulicht. Man erkennt, dass im Bereich der Wasserdampfsättigung, d.h. einer relativen Luftfeucht von 100%, bereits kleinste Temperaturänderungen die relative Feuchte um mehrere Prozent ändern. Im Beispiel der Figur 6 mit einem Taupunkt von 25°C reicht eine Temperaturerhöhung von bereits 1°C aus, um die relative Luftfeuchte um 6% abzusenken. Dadurch, dass der Deckel eines jeden Probengefäßes erwärmt wird, liegt in der angrenzenden Luftschicht bereits keine Wasserdampfsättigung mehr vor und die Kondensation ist verhindert.

Es sind nun 2 Fälle zu unterscheiden:
a) Die Temperatur des Probengefäßes wird relativ zu der Umgebungstemperatur angehoben.
b) Die Temperatur des Probengefäßes wird relativ zu der Umgebungstemperatur abgesenkt.

Im ersten Fall muss die Temperierung der den Deckel umströmenden, von der Ventilationseinrichtung kommenden Luft oberhalb der Temperatur des Probengefäßes gewählt werden, da sonst bei 100%-iger relativer Luftfeuchte im Probengefäß die Feuchtigkeit am Deckel von innen kondensiert.

Im zweiten Fall reicht es aus, die Temperierung so zu wählen, dass die Deckeltemperatur nicht unter die Umgebungstemperatur absinkt, um innen und außen Kondensation zu verhindern.

Als Beispiel für den ersten Fall befinde sich das Probengefäß in einem Gehäuse des Messgerätes, dessen Temperatur bei 23°C liege und in dem eine relative Luftfeuchte von 50% herrsche. Der Träger, auf welchem sich die Probengefäße, z.B. Petrischalen befinden, sei auf 30°C gesetzt und die Temperatur der Luft in den Petrischalen oberhalb der Pflanzen habe sich auf 29°C eingestellt mit einer relativen Feuchte von 100%. Nach zuvor Gesagtem muss nun die Deckelinnentemperatur auf >30°C gehoben werden, um Kondensation zu vermeiden.

Im Außenraum liegt der Taupunkt bei 12°C, was weit weg ist von der angenommenen Temperatur von 23°C im Gehäuse des Messgerätes.

Wie in Figur 4 gezeigt, ist es auch möglich, mehr als eine Ventilationseinrichtung 20 vorzusehen, wobei sich diese beiden Ventilationseinrichtung 20 insbesondere auf einander gegenüberliegenden Seiten des Trägers 10 angeordnet sein können. Insbesondere bei sehr großen Trägern kann dies sinnvoll sein, um bei allen Dekkein 52 annähernd dieselbe Temperatur einzustellen.

Die Erfindung wurde mit Bezug auf die Messung von Pflanzen und Keimlingen erläutert, jedoch können auch Messungen an anderen Organismen, wie insbesondere Bakterien, Kleintieren oder Embryonen und Zellkulturen durchgeführt werden. Weiterhin können die Probengefäße auch anders als die erwähnten Petrischalen ausgebildet sein. Insbesondere ist auch der Einsatz von sogenannten Mikroplatten, das heißt von Platten mit einer Vielzahl von Vertiefungen, möglich. In diesem Fall bildet jede Vertiefung ein Probengefäß.

### Bezugszeichenliste

- 10: Träger
- 12: Vertiefung
- 14: Wärmetauscher
- 18: Temperierungsgerät
- 20: Ventilationseinrichtung
- 21: Halteblock
- 23: Luftleitelement
- 24: Durchgangsöffnung
- 26: Ventilator
- 28: Heizwendel
- 30: Steuereinheit der Ventilationseinrichtung
- 32: erster Temperatursensor
- 34: zweiter Temperatursensor
- 36: dritter Temperatursensor
- 38: Luftfeuchtesensor
- 40: lichtdichtes Gehäuse
- 42: Kamera
- 44: Emissionsfilter
- 46: Anregungslichtquelle
- 48: Anregungsfilter
- 50: Probengefäß
- 50a: Kragen
- 52: Deckel
- 110: gehäuseartiger Träger
- 112: Oberseite
- 114: Hohlraum
- 116: Luftzufuhr
- 118: Luftauslass

## Patentansprüche

1. Vorrichtung zur Anordnung wenigstens eines Probengefäßes (50) in einem optischen Messgerät mit
einem Träger (10, 110) zur Anordnung des wenigstens einen Probengefäßes (50),
wobei am Träger (10, 110) oder benachbart zum Träger (10, 110) wenigstens eine Ventilationseinrichtung (20) mit wenigstens einem oberhalb des Trägers (10, 110) angeordneten Luftaustritt vorgesehen ist, wobei die Ventilationseinrichtung (20) ein Heizelement (28) zur Erwärmung des von ihr erzeugbaren Luftstroms aufweist,
**dadurch gekennzeichnet, dass** wenigstens ein erster Temperatursensor (32) zur Messung der Temperatur eines ein Probengefäß (50) verschließenden durchsichtigen Deckels (52) vorgesehen ist, wobei dieser erste Temperatursensor (32) Teil eines ersten Regelkreises ist, welcher zumindest das Heizelement der Ventilationseinrichtung (20) ansteuert.

2. Vorrichtung nach Anspruch 1, **dadurch gekennzeichnet, dass** zusätzlich zur Ventilationseinrichtung (20) eine Temperierungseinrichtung zur Temperierung des wenigstens einen Probengefäßes (50) vorgesehen ist.

3. Vorrichtung nach Anspruch 2, **dadurch gekennzeichnet, dass** der Träger (10, 110) mit der Temperierungseinrichtung ausgestattet oder thermisch mit dieser verbunden ist.

4. Vorrichtung nach Anspruch 2 oder Anspruch 3, **dadurch gekennzeichnet, dass** die Temperierungseinrichtung sowohl eine Erwärmung als auch eine Kühlung des Probengefäßes gegenüber der Umgebungstemperatur ermöglicht.

5. Vorrichtung nach einem der Ansprüche 2 bis 4, **dadurch gekennzeichnet, dass** ein zweiter Temperatursensor (34) zur Messung der Temperatur im Inneren eines Probengefäßes, eines Probengefäßes oder des Trägers vorgesehen ist, wobei dieser zweite Temperatursensor (34) Teil eines ersten Regelkreises ist, welcher zumindest das Heizelement der Ventilationseinrichtung ansteuert.

6. Vorrichtung nach Anspruch 1 und/oder Anspruch 5, **dadurch gekennzeichnet, dass** der erste Regelkreis so eingerichtet ist, dass die Temperatur des Deckels (52) aufgrund des von der Ventilationseinrichtung zuführbaren Luftstroms immer über dem Taupunkt der sich im Probengefäß befindenden Luft liegt.

7. Vorrichtung nach Anspruch 5 oder Anspruch 6, **dadurch gekennzeichnet, dass** der zweite Temperatursensor (34) weiterhin Teil eines zweiten Regelkreises ist, welcher die Temperierungseinrichtung ansteuert.

8. Vorrichtung nach Anspruch 6 oder Anspruch 7, **dadurch gekennzeichnet, dass** oberhalb des Trägers (10, 110) ein dritter Temperatursensor angeordnet ist, welcher Teil des ersten Regelkreises ist, wobei der erste Regelkreis so eingerichtet ist, dass die Temperatur des Deckels (52) aufgrund des von der Ventilationseinrichtung zugeführbaren Luftstroms immer über dem Taupunkt der vom dritten Temperatursensor (36) gemessenen Luft liegt.

9. Vorrichtung nach Anspruch 8, **dadurch gekennzeichnet, dass** oberhalb des Trägers (10, 110) ein Luftfeuchtesensor (38) zur Messung der Luftfeuchte vorgesehen ist, wobei dieser Luftfeuchtesensor Teil des ersten Regelkreises ist.

10. Vorrichtung nach einem der vorangehenden Ansprüche, **dadurch gekennzeichnet, dass** wenigstens zwei Ventilationseinrichtungen (20, 20) nach Anspruch 1 vorgesehen sind.

11. Optisches Messgerät mit einer Vorrichtung nach einem der Ansprüche 1 bis 10 und einer optischen Sensoreinheit, deren Eintrittsfenster oberhalb des Trägers liegt.

12. Optisches Messgerät nach Anspruch 11, **dadurch gekennzeichnet, dass** Träger und Ventilationseinrichtung innerhalb eines lichtdichten Gehäuses (40) angeordnet sind.

13. Optisches Messgerät nach einem der Ansprüche 11 oder 12, **dadurch gekennzeichnet, dass** es eine Luminometer und/oder ein Fluorometer ist.

14. Verwendung eines optischen Messgerätes nach einem der Ansprüche 11 bis 13 zur Beobachtung wenigstens eines Organismus in wenigstens einem Probengefäß.

## Claims

1. Device for assembling at least one sample container (50) in an optical measuring device, with
a carrier (10, 110) for arranging the at least one sample container (50),
wherein at least one ventilation device (20) is provided on the carrier (10, 110) or next to the carrier (10, 110) with at least one air outlet arranged above the carrier (10, 110), wherein the ventilation device (20) has a heating element (28) for heating the air flow which it can generate,
**characterised in that** at least one first temperature sensor (32) is provided for measuring the temperature of a transparent cover (52) closing a sample container (50), wherein this first temperature sensor (32) is part of a first control circuit which controls at least the heating element of the ventilation device (20).

2. Device according to claim 1, **characterised in that** in addition to the ventilation device (20), a tempering device is provided for tempering the at least one sample container (50).

3. Device according to claim 2, **characterised in that** the carrier (10, 110) is equipped with or thermally connected with the tempering device.

4. Device according to claim 2 or claim 3, **characterised in that** the tempering device allows both a heating and a cooling of the sample container in relation to the ambient temperature.

5. Device according to any one of claims 2 to 4, **characterised in that** a second temperature sensor (34) is provided for measuring the temperature inside the sample container, that of the sample container or the carrier, wherein this second temperature sensor (34) is part of a first control circuit which controls at least the heating element of the ventilation device.

6. Device according to claim 1 and/or claim 5, **characterised in that** the first control circuit is configured such that, because of the air flow which can be supplied by the ventilation device, the temperature of the cover (52) always lies above the dew point of the air present inside the sample container.

7. Device according to claim 5 or claim 6, **characterised in that** the second temperature sensor (34) is also part of a second circuit which controls the tempering device.

8. Device according to claim 6 or claim 7, **characterised in that** a third temperature sensor is arranged above the carrier (10, 110) and is part of the first control circuit, wherein the first control circuit is configured such that, because of the air flow which can be supplied by the ventilation device, the temperature of the cover (52) always lies above the dew point of the air measured by the third temperature sensor (36).

9. Device according to claim 8, **characterised in that** an air humidity sensor (38) is provided above the carrier (10, 110) for measuring the relative humidity, wherein this air humidity sensor is part of the first control circuit.

10. Device according to any one of the preceding claims, **characterised in that** at least two ventilation devices (20, 20) according to claim 1 are provided.

11. Optical measuring device with a device according to any one of claims 1 to 10 and an optical sensor unit, the inlet window of which lies above the carrier.

12. Optical measuring device according to claim 11, **characterised in that** the carrier and ventilation device are arranged inside a light-impermeable housing (40).

13. Optical measuring device according to any one of claims 11 or 12, **characterised in that** it is a luminometer and/or fluorometer.

14. Use of an optical measuring device according to any one of claims 11 to 13 for observing at least one organism in at least one sample container.

## Revendications

1. Dispositif d'agencement d'au moins un récipient d'échantillon (50) dans un appareil de mesure optique, comprenant
un support (10,110) pour l'agencement de l'au moins un récipient d'échantillon (50),
un dispositif de ventilation (20) ayant au moins une sortie d'air agencée au-dessus du support (10,110) étant prévu sur le support (10,110) ou au voisinage du support (10,110), le dispositif de ventilation (20) présentant un élément chauffant (28) pour chauffer le flux d'air produit par le dispositif de ventilation,
**caractérisé en ce qu'**il est prévu au moins un premier capteur de température (32) pour mesurer la température d'un couvercle transparent (52) fermant un récipient d'échantillon (50), ce premier capteur de température (32) faisant partie d'une première boucle de régulation qui pilote au moins l'élément chauffant du dispositif de ventilation (20).

2. Dispositif selon la revendication 1, **caractérisé en ce qu'**en plus du dispositif de ventilation (20) il est prévu un dispositif pour tempérer l'au moins un récipient d'échantillon (50).

3. Dispositif selon la revendication 2, **caractérisé en ce que** le support (10,110) est équipé du dispositif pour tempérer ou bien relié thermiquement à celui-ci.

4. Dispositif selon la revendication 2 ou la revendication 3, **caractérisé en ce que** le dispositif pour tempérer permet aussi bien un échauffement qu'un refroidissement du récipient d'échantillon par rapport à la température ambiante.

5. Dispositif selon l'une des revendications 2 à 4, **caractérisé en ce qu'**il est prévu pour mesurer la température à l'intérieur d'un récipient d'échantillon, d'un récipient d'échantillon ou du support un second capteur de température (34) qui fait partie d'une première boucle de régulation qui pilote au moins l'élément chauffant du dispositif de ventilation.

6. Dispositif selon la revendication 1 et/ou la revendication 5, **caractérisé en ce que** la première boucle de régulation est conçue pour que la température du couvercle (52) en raison du flux d'air qui peut être acheminé par le dispositif de ventilation soit toujours supérieure au point de rosée de l'air se trouvant dans le récipient d'échantillon.

7. Dispositif selon la revendication 5 ou la revendication 6, **caractérisé en ce que** le second capteur de température (34) fait en outre partie d'une seconde boucle de régulation qui pilote le dispositif pour tempérer.

8. Dispositif selon la revendication 6 ou la revendication 7, **caractérisé en ce qu'**au-dessus du support (10,110) est agencé un troisième capteur de température qui fait partie de la première boucle de régulation, laquelle est conçue pour que la température du couvercle (52) en raison du flux d'air qui peut être acheminé par le dispositif de ventilation soit toujours supérieure au point de rosée de l'air mesuré par le troisième capteur de température (36).

9. Dispositif selon la revendication 8, **caractérisé en ce qu'**il est prévu au-dessus du support (10,110) un capteur d'humidité de l'air (38) pour mesurer l'humidité de l'air, ce capteur d'humidité de l'air faisant partie de la première boucle de régulation.

10. Dispositif selon l'une des revendications précédentes, **caractérisé en ce qu'**il est prévu au moins deux dispositifs de ventilation (20,20) selon la revendication 1.

11. Appareil de mesure optique comprenant un dispositif selon l'une des revendications 1 à 10 et une unité de capteur optique dont la fenêtre d'entrée s'étend au-dessus du support.

12. Appareil de mesure optique selon la revendication 11, **caractérisé en ce que** le support et le dispositif de ventilation sont agencés à l'intérieur d'un boîtier (40) étanche à la lumière.

13. Appareil de mesure optique selon la revendication 11 ou 12, **caractérisé en ce qu'**il est un luminomètre ou un fluoromètre.

14. Utilisation d'un appareil de mesure optique selon l'une des revendications 11 à 13 pour l'observation d'au moins un organisme dans au moins un récipient d'échantillon.
